# EUROPEAN PATENT SPECIFICATION

(11) **EP 1 918 628 B1**
(45) Date of publication and mention of the grant of the patent: **24.08.2011**
(21) Application number: 06022432.6
(22) Date of filing: 27.10.2006
(51) Int. Cl.: F16N 31/00

(54) **Tank for transporting a liquid, in particular drained oil**
Behälter für den Transport einer Flüssigkeit, vor allem zum Auffangen von abgeflossenem Öl
Réservoir pour transporter un liquide, notamment pour récupérer des hydrocarbures drainés

(43) Date of publication of application: 07.05.2008
(73) Proprietor: Camoli, Marco, 40023 Castel Guelfo (BO) (IT)
(72) Inventor: Camoli, Marco, 40023 Castel Guelfo (BO) (IT)
(74) Representative: Paolini, Elena

(56) References cited:
- EP-A- 0 628 761
- GB-A- 2 309 438
- US-A1- 2005 173 896
- ANONYMOUS: "Wass.Taxi25lm.Verschl.grü Art.Nr.: 61181" NETCAMPING.DE, [Online] 18 October 2005 (2005-10-18), XP002430594 Retrieved from the Internet: URL:http://www.netcamping.de/tmp/assets/s2 dmain.html?http://www.netcamping.de/tmp/50 3296944f0fcde5f/50329695030cef201/50329695 4d074026a.html> [retrieved on 2007-04-20]

## Description

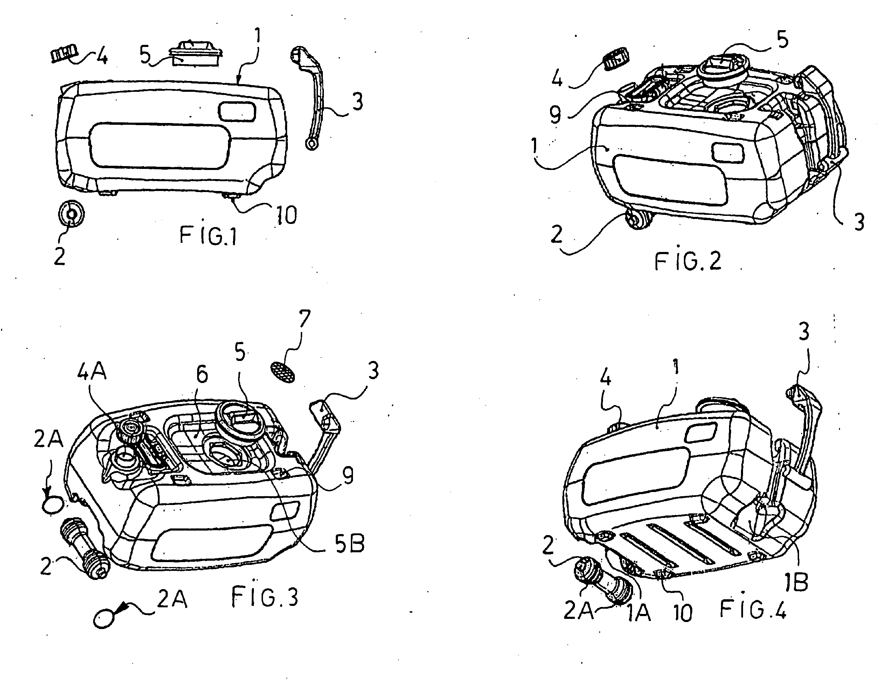

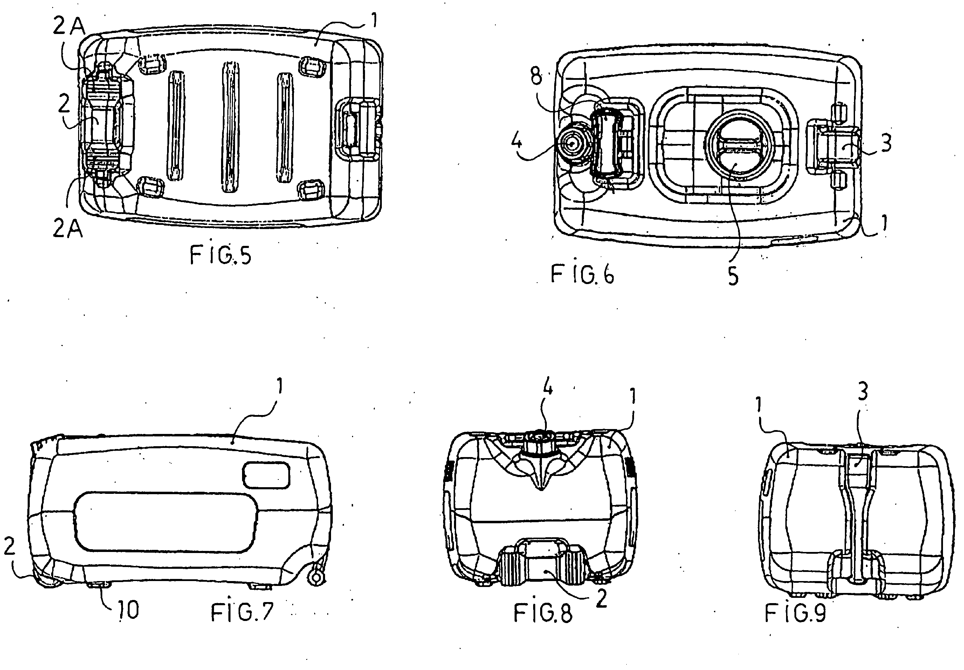

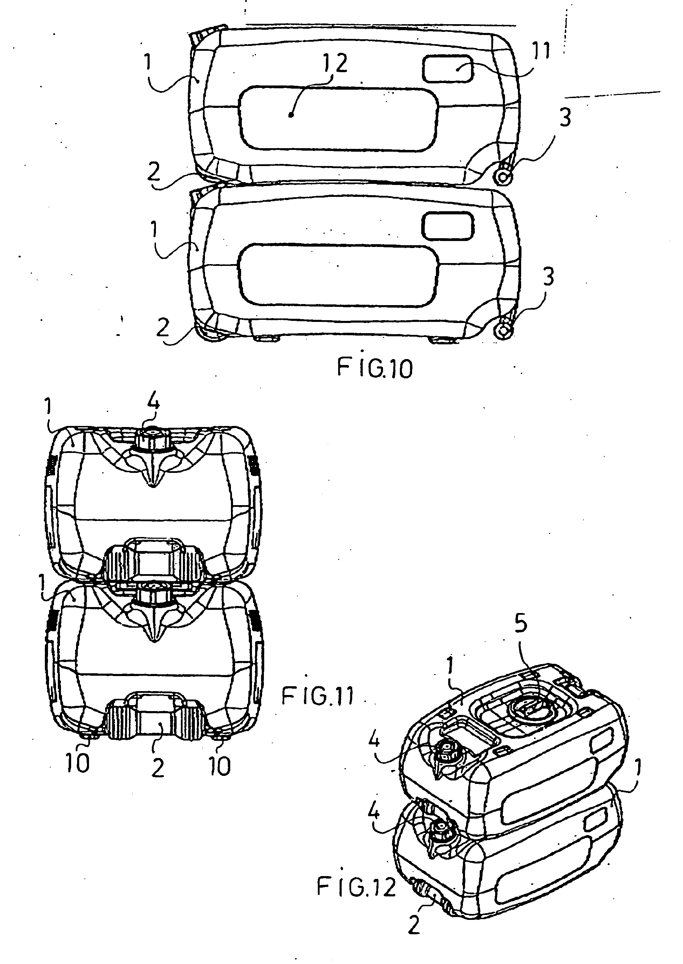

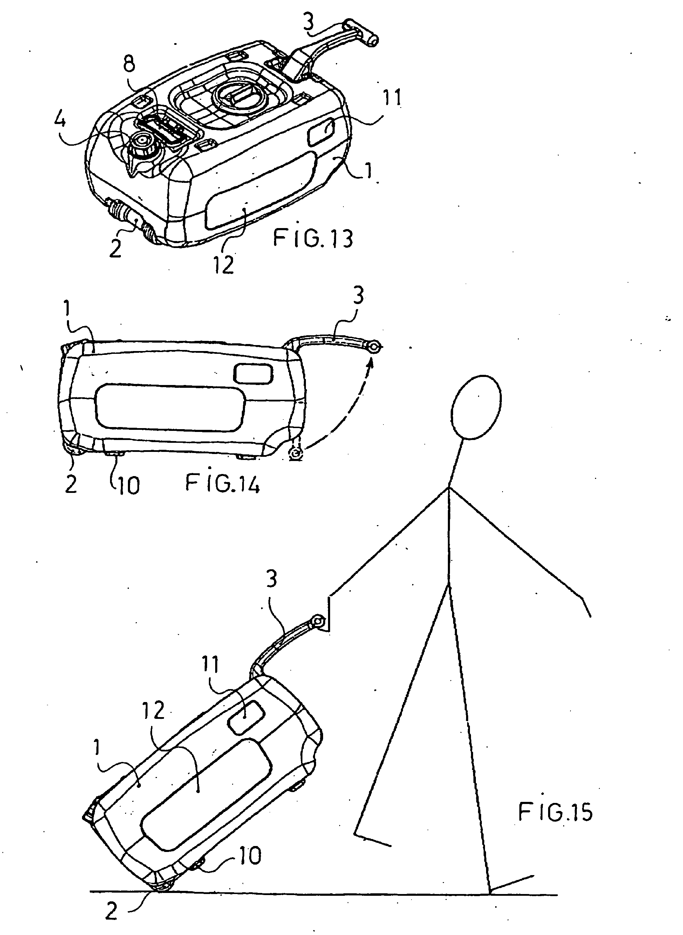

It is known that, on the base of the current laws and rules, the transport of liquids, whether or not for food use, in order to their use and of their collecting and their recycling after the use must be actuated in suitable way. This for not create physical damages to the operator who actuates said transport and also to avoid the environment pollution. In particular, regarding the workers protection, it is to consider that, referring to the manual transport of full containers on behalf of the operators, is provided a maximum weight over that the manual transport must no be actuated to avoid physical damages to the same worker. Said rule is, of course, enforced also in the field of the transport and of the discharge of the used liquids where the tanks full of oil are to be transported onto the recycling points. In this field are currently used tanks of small capacity and weight so to be, after the filling, transported and emptied at the recycling point of the drained oils. In the art are also known containers of bigger capacity but that stationary placed in a point must be then mechanical emptied with suitable suction apparatuses. In particular regarding the collecting and the disposal of the drained oils are known patented tanks that permit the collecting of said oils, both mineral, i.e. used for mechanical means, than vegetable , i.e. used in the foodstuffs. Said tanks fully solve the collecting problem but, they are to be manually raised for their transport or for their loading onto suitable means, and consequently they are to be of small or medium dimensions and are not suitable for the necessities of collecting a big oil quantity. Infact, it is to consider that, for example in the eat and drink points, in the mechanical shops or similar the oil quantity that is daily collected is very high and so big is the number of the tanks currently used that must be filled and then transported to the recycling point. The same problem is present also in other fields where is actuated the liquid transport for their subsequent use. For example in the case of transport of wine to a wholesale centre on behalf of a single user till the own house or in the case of transport of water in case of water emergency. In both these cited cases, currently, the transport is actuated with tanks of small capacity and so is necessary a big number of tanks, alternatively this transport is actuated with bigger containers, for example a demijohn, but with the presence of two persons to raise and transport the same. The invented tank solves the above cited problems such as it realizes a plastic tank, obtained for hot pressing and equipped with wheels and part of handgrip rolling for the transport, known in the other art as trolley. Said wheel-tank, being not to be raised for the transport, has a maximum capacity of forty litres, in a preferred embodiment with a capacity of thirty-six litres, so permitting the collecting of a big quantity of drained oil. This makes possible for the eat and drink points, for the mechanical shops or other to placed the wheel-tank in a stationary point and to have a self-sufficiency of a lot of days. When the filling is reached, the wheel-tank, closed with its caps, is in front raised by means of its rolling handgrip and it is pulled with motion permitted to the back wheel. Reached the emptying point the same tank is easily emptied previous unscrewing of the front cap for the suction. In case of necessity the tank can be manually emptied with grip of a hand onto the handle placed between the two caps whereas the other hand is to be positioned onto the front lower seat with the T-shaped handle in closing. This feature of manual drag on wheel permits, as already said, the use of the wheel-tank also for the easy transport of water, wine or liquids in general that will be subsequent used. Other feature of the invented tank consists of its particular shape given to rounded off corners, to receding parts and protruding parts that, other to determine a bigger strength, permits to pile the tanks one over the other. This feature creates a reduction of encumbrance in the storing of the emptied tanks so avoiding that, considering their dimension, a big space was occupied. In a preferred embodiment the invention consists of a plastic tank body 1 having a rounded of profile with back lower 1 A and front 1B seats that permit also the gripping of the emptied tank in the piling phase. In the back lower seat 1A is present a plastic wheel 2 with a plastic ring 2A for improving the rolling of the same wheel. The front seat 1B instead contains, during the storing and piling phases of the tank 1, a T-shaped handle 3. Onto the upper face of the tank 1 are present a back cap 4, for closing the hole 4A to be used for the went-hole and/or for the manual empty of the drained oil or of the contained liquid, and a front cap 5 to close the hole 5B used for the filling of the tank and for the possible discharge with suction mechanical apparatuses. Said hole 5B present inside a hollow 6 that helps the enter of the drained oil and avoid to dirty the tank body 1 with consequent fall of the oil on the ground and where said hole has a filter 7 to avoid that the solid residuals or other solid parts go inside the tank body 1. Placed between the back cap 4 and the front cap 5 a fixed handle 8 is present, re-entering in the phase of no use in a suitable seat. Near the four corners are then present, always onto the upper face of the tank 1, seats 9 into which come to be inserted, during the piling phase, the four small feet 10 present in the same position in the lower face of the subsequent tank. Said small feet 10 have also the work, during the use of the tank, of support the same on the ground. Laterally the body tank 1 have spaces 11 and 12 to be used for trademarks or different writings to be actuated both during the hot pressing than with the application of labels. In the phase of stocking in warehouse the tanks 1 are to be pilling with the small feet 10 of the over tank inserted in the seats 9 of the under tank so avoiding to occupy lot of space. During the use the emptied tank 1 is placed on the ground by means of its small feet 10. Unscrewed the front cap 5 and loosened the vent hole cap 4, la tank is filled in a only time with drained oil or the operation is repeated till the filling of the same tank. When the tank is filled, with caps 4 and 5 closed, the T-shaped handle 3 is rotated upward so to permit to raise the front part of the tank 1 and to drag the same that moves itself onto the wheel 2 having anti-sliding rubber tops. In this way the wheel-tank is easily dragged without effort to the operator like a conventional wheel-case. Coming onto he collecting point of the drained oil, the tank 1 is placed again on the ground by means of its small feet 10 and the suction is actuated after the opening of the cap 5. Alternatively, the tank can be manually emptied, in this case said empty is actuated after the opening of the cap 4 and with gripping of the handle 8. As already indicated, the invented wheel- tank is to be used not only for the transport of drained oils but also for transporting each kind of liquid, for example water or wine, to be subsequently used. In the different realizations the invented tank 1 is to be produced in different shapes and dimensions always on the base of the inventive step to have back wheel o wheels and front rotating handle so permitting the dragged transport. A preferred embodiment of the invented tank 1 is illustrated in the drawing of the enclosed sheets 1, 2, 3 and 4. In detail sheets 1 and 2 show the tank with its different parts. Sheet 3 shows the piling phase of the tank. Sheet 4 shows the dragged transport of the full tank to be actuated to the operator. In particular in sheet 1 figure 1 is exploded lateral view of the tank 1. Figure 2 is perspective view from a side with the caps 4 and 5 unscrewed. Figure 3 is always view of the tank 1 with the filter 7 before to be inserted onto the hole 5A and the plastic ring 2A before to be inserted onto the wheel. Figure 4 is under view to show the small feet 10. In sheet 2 figure 5 is under view of the different part during the no use. Figure 6 is upper view of the tank 1 in phase of no use. Figure 7 is lateral view. The figure 8 is back view. Figure 9 is front view of the same tank 1. In sheet 3 the figure 10 is lateral view of two tanks 1 pilled. Figure 11 is back view of said pilled tanks. Figure 12 is perspective view of the same. In sheet 4 figure 13 is view of the T-shaped handle 3 raised so to permit the drag of the tank 1. Figure 14 is lateral view. Figure 15 is schematic view of an operator who, gripping the T-shaped handle 3 and raising the tank 1 in its front part, actuates the drag of the same tank moves onto its wheel 2.

## Claims

1. Tank for transporting a liquid, particularly for drained oil collecting having at least a back wheel (2) and a handle (3) so to permit, with the full tank, to raise the same tank in its front part and to transport the same by dragging it onto the wheels, the tank being provided with supporting feet (10) on the lower face and seats (9) on the upper face, **characterized in that** the handle (3) is T-shaped and can be upwardly rotated, and **in that** the tank can be piled up whereby the feet (10) of the subsequent tank insert into the seats (9) of the former one.

2. Tank for transporting a liquid particularly for drained oil collecting, as to the claim 1, **characterized in that** to have a back cap (4) suitable to the vent hole and/or for the manual empty of the drained oil and a front cap (5) suitable to fill the tank and for discharge with suction mechanical apparatuses.

3. Tank for transporting a liquid particularly for drained oil collecting, as to the previous claims, **characterized in that** it can be manually emptied through a back hole (4A) with gripping of one hand onto a handle (8) whereas the other hand is to be positioned onto the front lower seat (1B) with the T-shaped handle (3) in closing.

4. Tank for transporting a liquid particularly for drained oil collecting, as to the claim 1, **characterized in that** the plastic wheel (2) has a plastic ring (2A) for improving the rolling of the same wheel.

5. Tank for transporting a liquid particularly for drained oil collecting, as to the previous claims, **characterized in that** a hole (5B) for the filling is present inside a hollow (6).

6. Tank for transporting a liquid particularly for drained oil collecting, as to claim 5, **characterized in that** the entering hole (5B) has a filter (7) to avoid that solid parts go inside the tank (1).

7. Tank for transporting a liquid particularly for drained oil collecting, as to the previous claims, **characterized in that** it is to be produced in different shapes and dimensions always having at least a back wheel (2) and a front rotating T-shaped handle (3).

## Patentansprüche

1. Behälter für den Transport einer Flüssigkeit, vor allem zum Auffangen von abgeflossenem Öl, der wenigstens ein Hinterrad (2) und einen Griff (3) hat, so dass er, mit dem vollen Behälter ermöglicht, denselben Behälter auf seinem Vorderteil hochzuheben und denselben Schleppen auf den Rädern zu tragen, weil der Behälter mit Stützfüssen (10) auf dem unteren Teil und Sitzen (9) auf dem oberen Teil geplant ist, **dadurch gekennzeichnet, dass** der Griff (3) die Form eines T hat und nach oben gedreht werden kann, und der Behälter durch Füssen (10) vom hinteren Behälter eingesteckt in den Sitzen (9) des vorderen Behälters aufgestapelt werden kann.

2. Behälter für den Transport einer Flüssigkeit, vor allem zum Auffangen von abgeflossenem Öl, nach Anspruch 1, **dadurch gekennzeichnet, dass** der ein hinteres Loch (4) benutzbar als Luftloch und/oder für die Handleerung des abgeflossenes Öls hat, und der einen vorderen Pfropfen (5) geeignet für die Einfüllung des Behälters und für das Entleeren durch Ansaugungswerkzeuge hat.

3. Behälter für den Transport einer Flüssigkeit, vor allem zum Auffangen von abgeflossenem Öl, nach den vorangegangen Ansprüche, **dadurch gekennzeichnet, dass** der von Hand durch eines hinteren Loch (4) mit Ergreifen einer Hand auf dem Griff (8) entleerbar ist, während die andere Hand auf dem unteren vorigen Sitz (1B) mit den geschlossenen T förmigen Griff (3) gestellt werden muss.

4. Behälter für den Transport einer Flüssigkeit, vor allem zum Auffangen von abgeflossenem Öl, nach Anspruch 1, **dadurch gekennzeichnet, dass** das Kunststoffrad (2) eine Kunststoffring (2A) hat, um das Fortrollen desselbes Rands zu verbessern.

5. Behälter für den Transport einer Flüssigkeit, vor allem zum Auffangen von abgeflossenem Öl, nach den vorangegangenen Ansprüchen, **dadurch gekennzeichnet, dass** das Loch (5B) für die Einfüllung innerhalb der Höflung (6) stattfindet.

6. Behälter für den Transport einer Flüssigkeit, vor allem zum Auffangen von abgeflossenem Öl, nach Anspruch 5, **dadurch gekennzeichnet, dass** das Zutrittloch (5B) einen Filter (7) hat, um das Eintritt von festeren Körpern im Behälter (1) zu versperren.

7. Behälter für den Transport einer Flüssigkeit, vor allem zum Auffangen von abgeflossenem Öl, nach den vorangegangenen Ansprüchen, **dadurch gekennzeichnet, dass** der immer mit wenigstens ein Hinterrad (1) und einen rollenden vorigen T förmigen Griff (3) zu verschiedenen Formen und Grössen gebildet werden kann.

## Revendications

1. Réservoir pour transporter un liquide, notamment pour récupérer des hydrocarbures drainés ayant au moins une roue postérieure (2) et une poignée (3) permettant ainsi, le réservoir plein, de soulever le réservoir même en sa partie frontale et de transporter le même grâce à l'entraînement sur les roues, puisque le réservoir est envisagé de posséder des appuis (10) sur la face inférieure et des sièges (9) sur la face supérieure, **caractérisé** du fait que la poignée (3) a la forme d'une T est peut être tournée en haut, et que le réservoir peut être rangé en colonne au moyen des pieds (10) du réservoir qui vont être insérés dans des sièges (9) du réservoir précédent.

2. Réservoir pour transporter un liquide, notamment pour récupérer des hydrocarbures drainés, selon la revendication 1, **caractérisé** du fait qu'il possède un trou postérieur (4) qui peut être employé comme trou de fuite et/ou pour pouvoir vider manuellement les hydrocarbures drainés et un bouchon antérieur (5) apte à remplir le réservoir et aussi pour le déchargement lorsque il va être accompli par des installations mécaniques d'aspiration.

3. Réservoir pour transporter un liquide, notamment pour récupérer des hydrocarbures drainés, selon les revendications précédentes, **caractérisé** du fait qu'il peut être vidé manuellement à l'aide d'un postérieur (4) tout en mettant une main sur la poignée (8) tandis que l'autre main doit être placée sur la siège inférieur postérieur (1B) la poignée la forme en T (3) en position de clôture.

4. Réservoir pour transporter un liquide, notamment pour récupérer des hydrocarbures drainés, selon la revendication 1, **caractérisé** du fait que la roue en plastique (2) possède un maillon en plastique (2A) afin d'améliorer le roulement de la roue même.

5. Réservoir pour transporter un liquide, notamment pour récupérer des hydrocarbures drainés, selon la revendications précédentes, **caractérisé** du fait que la trou (5B) pour le remplissage est prévu être à l'intérieur de la cavité (6).

6. Réservoir pour transporter un liquide, notamment pour récupérer des hydrocarbures drainés, selon la revendication 5, **caractérisé** du fait que le trou en entrée (5B) possède un filtre (7) pour éviter que des corps solides entrent dans le réservoir.

7. Réservoir pour transporter un liquide, notamment pour récupérer des hydrocarbures drainés, selon les revendications précédentes, **caractérisé** du fait que dit réservoir peut être produit en différents formes et dimensions possédant toujours au moins une roue postérieure (1) et une poignée antérieure à forme de T (3) à même de tourner.
